(19) **Europäisches Patentamt / European Patent Office / Office européen des brevets**

(11) **EP 3 623 975 B1**

(12) **FASCICULE DE BREVET EUROPEEN**

(45) Date de publication et mention de la délivrance du brevet:
**26.02.2025 Bulletin 2025/09**

(21) Numéro de dépôt: **19197106.8**

(22) Date de dépôt: **12.09.2019**

(51) Classification Internationale des Brevets (IPC):
**G06F 21/32** *(2013.01)* **G06F 21/34** *(2013.01)*
**H04L 9/08** *(2006.01)* **H04L 9/00** *(2022.01)*

(52) Classification Coopérative des Brevets (CPC):
**G06F 21/34; G06F 21/32;** H04L 9/008;
H04L 9/0861; H04L 2209/463

(54) **PROCÉDÉ ET SYSTÈME DE VOTE ÉLECTRONIQUE À IDENTIFICATION BIOMÉTRIQUE**

ELEKTRONISCHES ABSTIMMUNGSVERFAHREN UND -SYSTEM MIT BIOMETRISCHER IDENTIFIZIERUNG

METHOD AND SYSTEM FOR ELECTRONIC VOTING BY BIOMETRIC IDENTIFICATION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **12.09.2018 FR 1858179**

(43) Date de publication de la demande:
**18.03.2020 Bulletin 2020/12**

(73) Titulaire: **Idemia Identity & Security France**
**92400 Courbevoie (FR)**

(72) Inventeurs:
• **CHABANNE, Hervé**
**92400 COURBEVOIE (FR)**
• **DOTTAX, Emmanuelle**
**92400 COURBEVOIE (FR)**

(74) Mandataire: **Regimbeau**
**20, rue de Chazelles**
**75847 Paris Cedex 17 (FR)**

(56) Documents cités:
WO-A1-2016/114841    US-B2- 7 729 991

• DR MOHAMED ABO-RIZKA ET AL: "A Novel in E-voting in Egypt", IJCSNS INTERNATIONAL JOURNAL OF COMPUTER SCIENCE AND NETWORK SECURITY, vol. 7, 1 November 2007 (2007-11-01), XP055602660
• GISELA MEISTER ET AL: "eVoting with the European Citizen Card", 21 July 2008 (2008-07-21), XP055250567, Retrieved from the Internet <URL:https://www.ecsec.de/fileadmin/Ecsec-files/pub/ECC-voting.pdf> [retrieved on 20160216]
• LEE B ET AL: "Receipt-Free Electronic Voting Scheme with a Tamper-Resistant Randomizer", 1 November 2002, INFORMATION SECURITY AND CRYPTOLOGY ? ICISC 2002; [LECTURE NOTES IN COMPUTER SCIENCE], SPRINGER BERLIN / HEIDELBERG, PAGE(S) 389 - 406, ISBN: 978-3-540-00716-6, XP002572697
• BENJAMIN MATHON ET AL: "Secure and efficient approximate nearest neighbors search", PROCEEDINGS OF THE FIRST ACM WORKSHOP ON INFORMATION HIDING AND MULTIMEDIA SECURITY, IH&MMSEC '13, 1 January 2013 (2013-01-01), New York, New York, USA, pages 175, XP055633866, ISBN: 978-1-4503-2081-8, DOI: 10.1145/2482513.2482539

## Description

### DOMAINE TECHNIQUE DE L'INVENTION

L'invention s'inscrit dans le domaine du vote électronique sécurisé. En particulier, l'invention concerne un procédé d'enrôlement en amont d'un scrutin, comprenant le chargement de cartes à puce permettant une identification biométrique des votants, ainsi qu'un procédé de vote à l'aide des cartes à puce.

### ETAT DE LA TECHNIQUE

Pour faciliter et fiabiliser les opérations de vote lors d'un scrutin, plusieurs Etats et collectivités locales ont déjà adopté des protocoles de vote électronique et se sont affranchi des bulletins de vote en papier.

Deux propriétés fondamentales d'un procédé de vote électronique sont la confidentialité des bulletins de vote, ainsi que la vérifiabilité : la capacité pour un tiers de vérifier que le résultat final du vote correspond bien aux votes exprimés par les électeurs.

Pour assurer la propriété de confidentialité, il est connu de crypter les options de vote exprimées par les électeurs de manière à ce que seul un serveur certifié connaisse la clé de décryptage permettant de remonter à une option de vote. Certains types de cryptage permettent à un serveur d'administration de déterminer un résultat final de vote sans avoir accès à chaque vote individuel sous forme décryptée.

S'agissant de la vérifiabilité, l'usage d'algorithmes de signature à clés privées, lors de l'envoi des votes, assure que seuls des votants préalablement autorisés ont participé au scrutin.

Pour renforcer la sécurité des scrutins, il est connu de demander un mot de passe à chaque votant au moment d'enregistrer les votes. A ce titre, un système connu repose sur la fourniture d'une carte à puce à chaque votant, lors d'un enrôlement en amont du scrutin. Le votant doit donc se munir de sa carte pour participer au vote.

Sur la carte à puce, ou « smart card », est enregistrée une clé privée qui permet au votant de s'identifier de façon unique. L'usage d'une carte à puce est avantageux car une telle carte constitue un matériel qui peut facilement être audité, en vue de prouver l'intégrité et la sécurité des algorithmes qui y sont encodés.

La publication Receipt-free electronic voting scheme with a tamper-resistant randomizer, Lee, Kim, In : Information Security and Cryptology - ICISC 2002, Revised Papers, pp. 389-406 (2002) décrit des cartes à puce dans lesquelles des clés privées de votant sont encodées et dotées de générateurs aléatoires afin de réaliser un cryptage d'une option de vote.

La publication Receipt-freeness in large-scale elections without untappable channels, Magkos, Chrissikopoulos, In : Towards the E-Society : E-Commerce, E-Business, and E-Government, I3E, n pp. 683-693 (2001) décrit également un protocole de vote avec encodage d'une clé privée de votant sur une carte à puce. Le document US7729991B2 divulgue l'utilisation d'une carte à puce pour le vote encodant les données cryptographiques accessibles sur la base d'une donnée biométrique.

Il est cependant peu réalisable de fournir à chaque votant une carte à puce contenant une clé privée unique.

Un frein majeur est le coût d'un tel déploiement, puisqu'il faut prévoir un nombre de cartes à puce égal au nombre d'électeurs autorisés. De plus, les cartes ne sont pas facilement récupérables pour des scrutins suivants car chaque votant autorisé garde une carte en sa possession.

Un autre inconvénient est la possibilité pour un votant autorisé de confier sa carte à puce à des individus qui ne sont pas des votants autorisés et de leur communiquer un mot de passe débloquant l'accès aux données de la carte, ce qui leur permettrait de participer au scrutin.

### PRESENTATION GENERALE DE L'INVENTION

Au vu de ce qui précède, il existe un besoin pour un procédé d'enrôlement et un procédé de vote qui soient beaucoup moins coûteux pour les Etats et les collectivités.

La réduction du coût d'enrôlement doit cependant être obtenue sans compromettre la sécurité des scrutins, s'agissant notamment de la propriété fondamentale de vérifiabilité des votes.

L'invention concerne à ce titre, selon un premier aspect, un procédé d'enrôlement conforme à la revendication 1.

L'enregistrement, dans le dispositif électronique, d'une association entre une pluralité de données biométriques et des pointeurs correspondant à des données cryptographiques de vote permet au dispositif électronique d'être utilisé plus tard par plusieurs votants. Une identification biométrique ultérieure lors du vote permet d'assurer que la bonne personne utilisera la bonne donnée cryptographique.

Ce procédé d'enrôlement présente donc l'avantage d'être moins onéreux que les techniques d'enrôlement connues, car il n'est pas nécessaire de fournir un grand nombre de dispositifs - par exemple des cartes à puce - à raison d'un dispositif pour chaque votant à enrôler.

La sécurité du stockage des clés privées est aussi accrue puisque le dispositif électronique est configuré pour permettre l'utilisation d'une donnée cryptographique de vote uniquement à condition qu'une identification biométrique soit réussie.

Un avantage additionnel est qu'il n'est pas demandé à un votant autorisé d'apprendre ou de conserver un mot de passe ou un identifiant. L'identification en vue de participer au scrutin est de type biométrique. Ce type d'identification est rapide et pratique pour le votant.

Le procédé d'enrôlement défini ci-avant peut comporter les caractéristiques suivantes, optionnelles et non limitatives, prises seules ou en l'une quelconque de leurs combinaisons techniquement possibles :

- le procédé comprend une étape supplémentaire de génération de la donnée cryptographique de vote par le dispositif électronique ;

- les données cryptographiques de vote comprennent une clé secrète de votant $usk_{id}$ et une clé publique de votant $upk_{id}$, de préférence de forme $upk_{id} = g^{uskid}$ mod p avec p et g des paramètres de domaine ;

- le procédé comprend une étape préalable d'association, dans une base de données d'un serveur distant, entre un identifiant d'un votant de la pluralité de votants et un identifiant de bureau de vote, la donnée biométrique étant transmise uniquement à un dispositif électronique amené à être dans un bureau de vote correspondant audit identifiant de bureau de vote lors du scrutin.

L'invention concerne en outre un procédé de vote conforme à la revendication 6.

Le procédé de vote peut notamment être mis en œuvre à la suite d'un procédé d'enrôlement tel que défini ci-avant.

Le procédé de vote peut comporter les caractéristiques non limitatives suivantes, prises seules ou en l'une quelconque de leurs combinaisons techniquement possibles :

- le procédé comprend des étapes supplémentaires de saisie d'une option de vote par l'individu et de cryptage de l'option de vote à l'aide d'une clé de scrutin pour obtenir un vote crypté compris dans le résultat de vote ;
- l'étape de cryptage comprend en outre la génération d'une preuve de validité de vote à l'aide de la donnée cryptographique, de préférence à l'aide d'une clé secrète de votant comprise dans les données cryptographiques ;
- le procédé comprend une étape supplémentaire de signature, par l'individu, du vote crypté à l'aide de la donnée cryptographique, de préférence à l'aide d'une clé secrète de votant comprise dans les données cryptographiques, pour obtenir un vote signé compris dans le résultat de vote ;
- la donnée cryptographique étant de préférence cryptée avec une clé de cryptage (e) du dispositif électronique ;
- la vérification comprend un calcul de distance euclidienne ou de Hamming entre la donnée biométrique acquise et la donnée biométrique stockée ;
- l'étape de vérification comprend la recherche d'une correspondance entre la donnée biométrique acquise par le capteur et la pluralité de données biométriques stockées lors de l'enrôlement, de préférence par une méthode de recherche de voisin le plus proche ou « Nearest Neighbour Search » ;

- le procédé comprend une étape ultérieure de dépouillement comprenant un calcul d'un résultat de vote à partir de votes cryptés associés à des votes signés ayant une signature valide ;
- dans ce dernier cas, le dépouillement comprend un calcul du résultat de vote à partir des options de vote cryptées et à l'aide de propriétés homomorphes du système de cryptage du scrutin ;
- le procédé comprend des étapes de réception de résultats de vote par un serveur d'administration et de calcul d'un résultat total comprenant une vérification des résultats de vote à l'aide d'une preuve de dépouillement correct.

L'invention concerne selon un autre aspect un dispositif électronique conforme à la revendication 11.

Le dispositif électronique peut en outre, de façon non limitative, être configuré pour crypter une option de vote soumise par un individu à l'aide d'une clé de scrutin préenregistrée dans la carte électronique et/ou pour générer un vote signé à l'aide de la donnée cryptographique de vote.

Le dispositif électronique peut être, de façon non limitative, une carte à puce ou une clé USB ou un dispositif mobile sécurisé.

L'invention se rapporte, selon un autre aspect, à un dispositif de vote destiné à être installé dans un bureau de vote, le dispositif de vote comprenant un tel dispositif électronique, un capteur biométrique et un terminal de vote comprenant une interface utilisateur.

**PRESENTATION GENERALE DES FIGURES**

D'autres caractéristiques, buts et avantages de l'invention ressortiront de la description qui suit, qui est purement illustrative et non limitative, accompagnée des dessins annexés parmi lesquels :

La **Figure 1** représente schématiquement un exemple de système de vote électronique de l'invention ;
La **Figure 2** représente schématiquement un dispositif de vote selon un mode de réalisation, destiné à être utilisé dans un bureau de vote ;
La **Figure 3a** illustre les étapes d'un procédé d'enrôlement selon un premier mode de réalisation ;
La **Figure 3b** illustre les étapes d'un procédé d'enrôlement selon un deuxième mode de réalisation ;
La **Figure 4** illustre les étapes d'un procédé de vote électronique selon un mode de réalisation possible dans lequel les données cryptographiques de vote comprennent, pour un votant préalablement enrôlé, une clé privée et une clé publique.

**DESCRIPTION DETAILLEE DE MODES DE REALISATION**

Dans toute la suite, on décrit l'usage de cartes à puce afin de soumettre un vote électronique lors d'un scrutin. Toutefois, l'enrôlement en vue du vote ainsi que le vote électronique lui-même pourraient être réalisés avec un dispositif électronique autre qu'une carte à puce, dès lors que ledit dispositif comprend un élément sécurisé.

Par « élément sécurisé » on entend une plate-forme avec un processeur sécurisé configuré pour réaliser un stockage inviolable de données à l'aide de clés sécurisées. Le processeur est ici configuré en outre pour réaliser des calculs, notamment des comparaisons entre une donnée biométrique acquise et une donnée biométrique stockée en mémoire. Un tel élément sécurisé est facilement auditable par une autorité de confiance. Une carte SIM, une carte eSE, une carte micro-SD sont des exemples de tels éléments sécurisés.

La présentation Mobile/NFC Security Fundamentals, Smart Card Alliance, disponible à l'adresse URL suivante : https://www.securetechalliance.org/resources/webinars/Secure Element s 101 FINAL3 032813.pdf, décrit, notamment aux pages 6 à 9, des exemples d'éléments sécurisés et une architecture possible de carte électronique constituant un élément sécurisé.

Par ailleurs, la description ci-après concerne un vote dans un bureau de vote officiel d'un territoire (Etat ou collectivité locale). L'invention s'applique avec les mêmes avantages dans tout autre type de scrutin, ou dans un contexte autre qu'un scrutin nécessitant que plusieurs individus communiquent une donnée de leur choix de façon authentifiable, par exemple dans le cadre d'un contrôle de connaissances. Il n'est alors pas nécessaire que les données communiquées soient cryptées.

Sur les figures annexées et dans la description ci-après, des éléments similaires sont désignés par une même référence alphanumérique.

*Système de vote électronique*

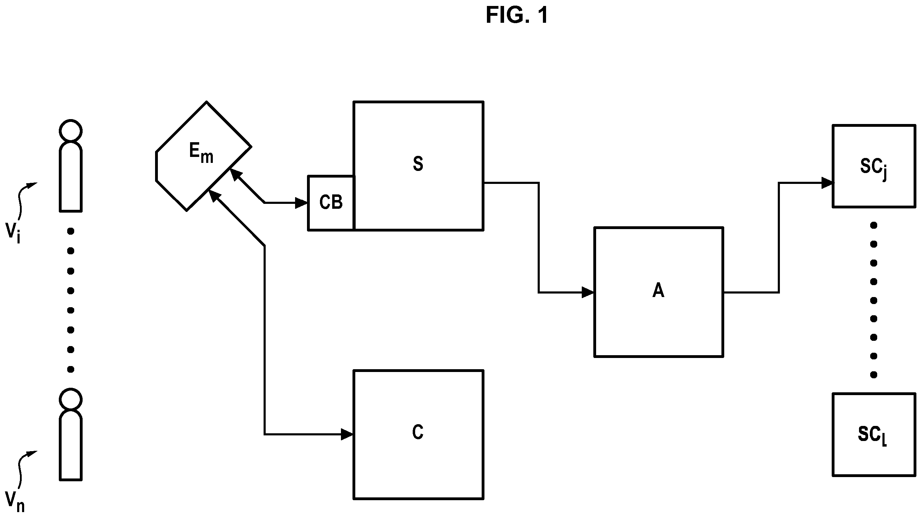

On a représenté en **Figure 1** une architecture fonctionnelle d'un système de vote électronique selon un exemple, permettant à des votants $V_1$, ..., $V_i$, ..., $V_n$ de participer à un scrutin. Le système de vote comprend un serveur C d'enrôlement et au moins un, de préférence plusieurs, dispositifs de vote comprenant chacun un terminal S de vote, un capteur biométrique CB et une carte à puce $E_m$.

De manière préférée, le système de vote comprend aussi un serveur A d'administration du scrutin ainsi qu'une pluralité de serveurs $SC_1$, ..., $SC_j$, ..., $SC_l$ de certification.

Le serveur C d'enrôlement comprend une mémoire pour enregistrer des données biométriques acquises de façon certifiée, ou en alternative, a accès à une base de données biométriques certifiées.

Dans une variante possible, le serveur C est configuré pour générer des données cryptographiques de vote et pour transmettre lesdites données à une carte à puce $E_m$. Pour ce faire, le serveur peut être doté d'une interface de lecture de cartes.

Le serveur A est relié aux serveurs $SC_j$ et au terminal S de vote par un réseau de communication à haut niveau de sécurité. Les échanges de données entre lesdites entités sont préférentiellement cryptés.

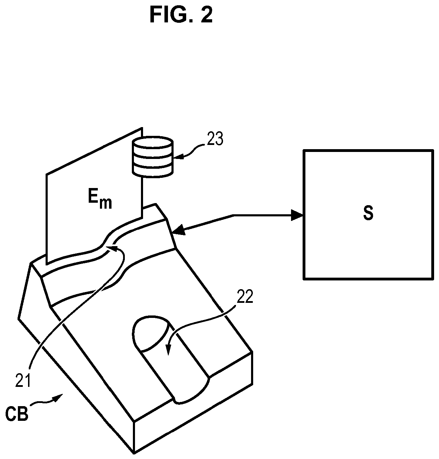

La **Figure 2** illustre un dispositif de vote selon un exemple, comprenant le terminal de vote S, la carte électronique $E_m$ et le capteur biométrique CB. Dans toute la suite, on parlera indifféremment de « carte électronique » ou de « carte à puce ».

Le dispositif de vote de la Figure 2 est par exemple mis à disposition des votants autorisés lors d'un scrutin, dans un isoloir d'un bureau de vote. La confidentialité du vote est garantie par le fait que l'isoloir ne peut admettre qu'une personne à la fois.

Le capteur CB comprend une fente 21 pour insertion de la carte à puce $E_m$. La fente comprend une liaison électronique pour permettre un échange de données entre la carte et le capteur. De préférence, les données ainsi échangées ne sont pas communiquées au terminal S.

Le capteur CB comprend en outre une zone 22 d'acquisition biométrique ; dans le présent exemple, des empreintes digitales sont utilisées comme biométrie et la zone 22 est une zone de positionnement de doigt. Le capteur CB est de préférence configuré pour réaliser une détection de vivacité (« liveness detection ») lors de l'acquisition d'une donnée biométrique, afin de détecter une éventuelle usurpation d'identité lors de l'acquisition.

La carte à puce $E_m$ comprend des moyens de calcul configurés pour mettre en œuvre les procédés d'enrôlement et de vote électronique décrits ci-après. La carte à puce comprend en outre une mémoire 23 sur laquelle sont enregistrées une pluralité d'associations entre un pointeur sur une donnée cryptographique de vote et une donnée biométrique t acquise de manière certifiée. Les données cryptographiques de vote sont par exemple des paires comportant une clé privée et une clé publique. La génération de la clé publique et de la clé privée n'impliquent pas nécessairement une autorité d'une infrastructure de type PKI.

Les moyens de calcul et la mémoire sont compris dans un élément sécurisé.

Les moyens de calcul sont notamment configurés pour acquérir une donnée biométrique b depuis une interface d'acquisition du capteur CB et pour vérifier une correspondance entre la donnée b acquise et l'une des données t présentes dans la mémoire 23.

La carte à puce peut en outre posséder une clé de cryptage e qui lui permet de chiffrer des données échangées avec des entités externes. Il peut s'agir d'un chiffrement symétrique ou asymétrique.

Le terminal de vote S présente une interface utilisateur comprenant un écran, à l'aide de laquelle un votant peut visualiser des options de vote proposées et sélectionner une ou plusieurs options de vote. L'interface peut être tactile ou à boutons.

De préférence, le terminal S est configuré pour détecter automatiquement une tentative de sabotage par un attaquant externe.

De façon optionnelle, le dispositif de vote peut en outre être doté d'une imprimante reliée au terminal S, configurée pour imprimer un identifiant de bulletin de vote sous la forme d'une chaîne de caractères, d'un code-barres ou d'un QR Code. L'identifiant imprimé est récupéré par un individu après soumission de son bulletin de vote.

On notera que chaque dispositif de vote contient préférentiellement une seule carte à puce $E_m$ pour réduire les coûts de déploiement du système de vote. De plus, la mémoire de chaque carte $E_m$ peut être vidée et réutilisée après chaque scrutin.

Ainsi, le coût du déploiement des dispositifs de vote nécessaires à un scrutin, organisé par exemple par l'Etat ou par des collectivités locales, est largement réduit par rapport à des solutions connues reposant sur la fourniture d'une carte à puce individuelle à chaque votant autorisé.

*Enrôlement de votants autorisés*

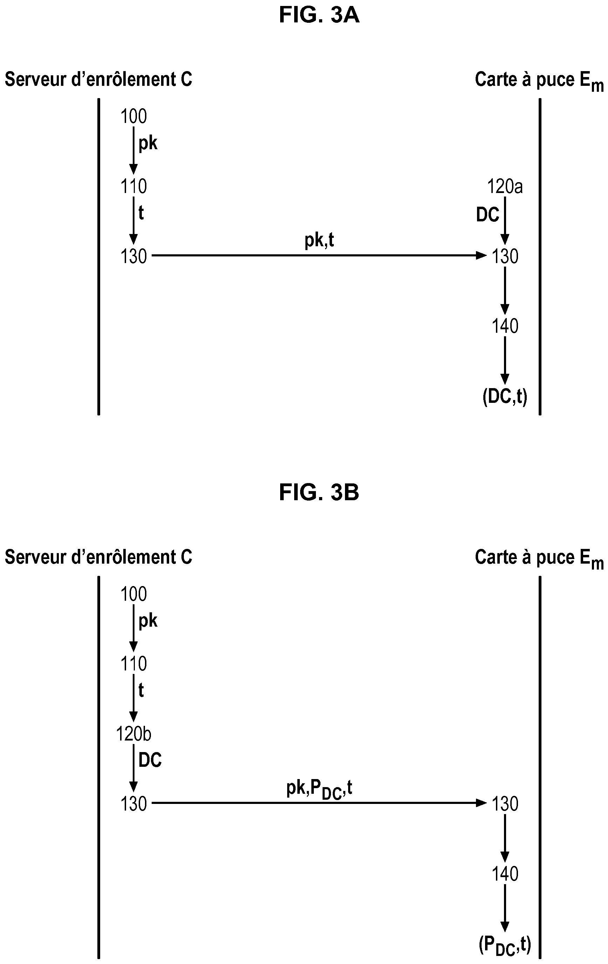

On a représenté en **Figure 3a** un procédé d'enrôlement de votants autorisés en amont d'un scrutin, selon un premier mode de réalisation. Ce procédé est par exemple mis en œuvre par un serveur C d'enrôlement et une carte électronique $E_m$ illustrés en Figure 1.

A une étape 100 optionnelle, une clé de scrutin pk est obtenue. Dans un exemple possible, la clé publique de scrutin pk est générée par le serveur A d'administration en relation avec les serveurs $SC_j$ de certification, chaque serveur de certification générant une partie de la clé de scrutin et le serveur d'administration calculant la clé publique pk.

Dans cet exemple, la clé publique de scrutin pk correspond alors à une pluralité de clés secrètes de scrutin $sk_j$, chaque serveur $SC_j$ de certification détenant l'une desdites clés secrètes.

De plus, un chiffrement T est obtenu par la carte, de préférence un chiffrement homomorphe permettant de décrypter le cumul des votes sans avoir accès à chaque vote individuel sous forme décryptée. Si le chiffrement T est homomorphe par addition, il vérifie l'égalité suivante pour des options de vote $v_k$ :

$$T(v_1 + ... + v_N) = T(v_1) + .... T(v_N)$$

L'enrôlement se poursuit par une étape 110 d'acquisition, par le serveur C d'enrôlement, d'une donnée biométrique de manière certifiée. Par « acquisition certifiée », on entend que la donnée acquise peut être associée de façon fiable à l'individu (de préférence, on demande à l'individu de fournir un document officiel d'identité lors de cette acquisition). La donnée biométrique peut notamment être une empreinte digitale et/ou une image d'iris et/ou une image de visage. En alternative, on peut utiliser toute biométrie pouvant être acquise à la volée au moment du vote avec une rapidité et une fiabilité suffisantes.

En alternative de l'étape 110, une donnée biométrique t pré-stockée est récupérée dans une base de données par le serveur d'enrôlement.

L'enrôlement comprend ensuite une étape 120a de génération par la carte d'au moins une donnée cryptographique DC associée au votant. En alternative, l'étape 120a est mise en œuvre en parallèle des étapes 100 et 110 ou avant les étapes 100 et 110.

La donnée cryptographique DC est une donnée qui permet de réaliser une opération cryptographique sur une donnée de vote : chiffrement, signature... Ici, la donnée DC correspond de manière unique au votant.

Dans l'exemple qui va suivre, les données cryptographiques DC de vote d'un votant, associées à un identifiant id correspondant de manière unique au votant, sont une clé privée $usk_{id}$ et une clé publique $upk_{id}$ qui permettent de signer un vote. Les clés vérifient ici l'équation suivante :

$upk_{id} = g^{uskid} \bmod p$ où p et g sont des paramètres de domaine. Pour un exemple de forme des paramètres de domaine p et g, on pourra se reporter à la page 15 du document suivant : https://nvlpubs.nist.gov/nistpubs/FIPS/NIST.FIPS.186-4.pdf.

En alternative, on pourra utiliser tout algorithme connu de génération de clés de signature.

La clé secrète $usk_{id}$ peut être obtenue en appliquant une fonction de hachage à une phrase secrète ou « passphrase ».

Dans le procédé de la Figure 3a, la donnée cryptographique de vote DC est donc générée à l'intérieur de la carte.

La donnée cryptographique (par exemple une clé privée) peut être fonction de la donnée biométrique t acquise et d'un secret maître, ou encore, être fonction d'un identifiant de votant et d'un secret maître. Un avantage est d'assurer que les données générées par plusieurs cartes à puce sont de même forme.

A une étape 130, le serveur C transmet à la carte électronique $E_m$ la clé de scrutin pk et la donnée biométrique t, de préférence sous forme cryptée.

Le procédé d'enrôlement comprend ensuite une étape 140 de stockage, dans la mémoire 23 de la carte, en lieu et place de la donnée cryptographique DC, d'un pointeur de données $P_{DC}$ correspondant à la donnée DC (ici la clé privée et la clé publique) en association avec la donnée biométrique t de l'individu.

Le pointeur est de taille bien moindre que celle de la donnée DC complète. Un avantage de cette variante est d'économiser de l'espace de stockage sur la carte. La donnée DC est alors stockée dans une base de données distante, de préférence cryptée avec une clé K de cryptage de la carte.

De manière avantageuse, le pointeur associé à la donnée DC est uniquement sauvegardé dans la ou les cartes à puce qui sont destinées à être dans le bureau de vote où est attendu le votant, selon l'information d'une base de données distante. Un avantage est de limiter les ressources de stockage nécessaires sur chacune des cartes à puce.

Dans le présent exemple, la clé publique $upk_{id}$ peut, de façon avantageuse, être publiée à l'issue de l'enrôlement dans une liste L de clés publiques accessible sur le réseau.

On a représenté en **Figure 3b** un procédé d'enrôlement de votants autorisés selon un deuxième mode de réalisation alternatif.

Dans ce mode, la donnée cryptographique DC de vote n'est pas générée à l'intérieur de la carte $E_m$, mais est générée par le serveur d'enrôlement C à une étape 120b.

Les étapes 100 et 110 sont identiques à celles de la Figure 3a.

Lors de l'étape 120b, le serveur C génère la donnée cryptographique DC (par exemple une clé privée et une clé publique conformes à l'exemple décrit ci-avant en relation à la Figure 3a).

Lors de l'étape 130, le serveur C transmet la donnée biométrique t à la carte à puce. Il transmet également un pointeur $P_{DC}$ correspondant à la donnée cryptographique DC dans une base de données relationnelle.

Ainsi, il n'est pas nécessaire de transmettre la donnée cryptographique DC à la carte à puce.

A une étape 140, une association entre le pointeur $P_{DC}$ et la donnée biométrique t est enregistrée dans la mémoire de la carte à puce $E_m$. A l'issue de cet enregistrement, une partie publique de la donnée DC peut être publiée.

Un avantage de ce deuxième mode de réalisation est que la puissance de calcul et l'espace de stockage de la carte à puce $E_m$ peuvent être réduits, puisqu'il n'est pas nécessaire de dimensionner la carte pour générer et stocker des données cryptographiques complètes.

*Vote électronique*

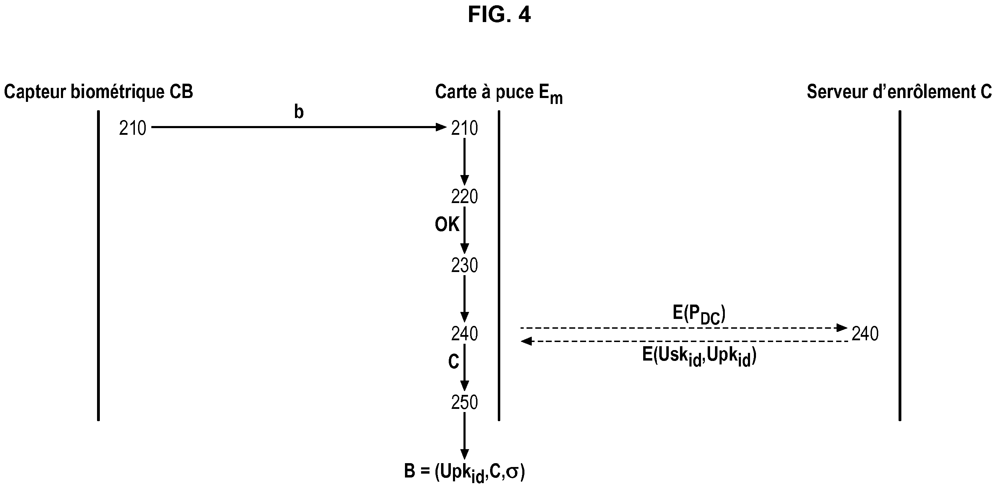

**La Figure 4** illustre un procédé de vote électronique selon un mode de réalisation. Ce procédé est par exemple mis en œuvre par le dispositif de vote décrit ci-avant en relation à la Figure 2, comprenant le capteur CB et la carte $E_m$, en relation avec le serveur C d'enrôlement.

Lors du vote électronique, un individu se présente au bureau de vote qui lui correspond, la carte à puce $E_m$ ayant été préalablement placée dans un isoloir du bureau de vote. L'individu réalise d'abord une identification biométrique à l'aide du capteur CB et de la carte $E_m$. Si l'identification est réussie, il peut utiliser la donnée cryptographique DC de vote qui lui est associée pour soumettre un bulletin de vote.

A une étape 210, l'individu réalise son identification en présentant sur le capteur CB un type de donnée biométrique qui correspond à une biométrie utilisée pour l'enrôlement, ici une empreinte digitale déposée dans la zone 22 du capteur.

Le capteur CB transmet alors la donnée biométrique b acquise à la carte $E_m$ pour vérification, à une étape 220, d'une correspondance avec l'une des données biométriques t stockées dans la carte. La vérification correspond à un « Match on Card ». Lors de l'identification, l'individu qui tente de s'identifier est recherché parmi les N individus dont les données biométriques sont stockées sur la carte (« 1:N Match »). En alternative, on pourrait prévoir une authentification correspondant à un « 1:1 Match » : l'individu cherchant à participer au scrutin annonce alors une identité, et on recherche ladite identité dans la carte.

Dans le présent exemple, on utilise des empreintes comme données biométriques stockées sous forme de vecteurs de 512 bits. On pourra se référer au document suivant : MINEX II - An assessment of Match-on-Card technology accessible à l'adresse https://www.nist.gov/itl/iad/image-group/minex-ii-assessment-match-card-technology.

Selon un autre exemple, les données biométriques sont des images de visage stockées sur des vecteurs de 128 bits dans un espace euclidien. Le document Facenet: A unified embedding for face recognition and clustering, Schroff, Kalenichenko, Philbin, In: IEEE Conference on Computer Vision and Pattern Recognition, CVPR. Pp 815-823 (2015) décrit une implémentation possible d'un algorithme d'identification biométrique pour les visages.

L'identification biométrique peut inclure, notamment dans les deux exemples ci-avant, un calcul de distance entre la donnée biométrique acquise et une donnée biométrique stockée pour vérifier une correspondance entre les deux dites données. La distance utilisée est une distance euclidienne ou une distance de Hamming.

De façon avantageuse, la vérification de correspondance inclut une recherche de voisin le plus proche de la donnée biométrique acquise, ou « Nearest Neighbour Search », la correspondance étant vérifiée entre la donnée acquise et ledit voisin le plus proche.

On utilise par exemple une méthode de recherche de voisin le plus proche basée sur le Locality Sensitive Hashing, ou LSH. Le document A fast search algorithm for a large fuzzy database, Hao, Daugman, Zielinski, IEEE Trans. Information Forensics and Security 3(2), pp. 203-212 (2008) décrit une implémentation LSH pour un contexte d'identification à l'aide d'images d'iris d'individus, les données d'iris étant des vecteurs de taille 256 bits. De tels calculs nécessitent généralement un temps et des ressources de calcul moindres en comparaison à des calculs de distance pour tous les votants enregistrés sur la carte à puce. Ces calculs sont ainsi facilement intégrables à la carte à puce.

Pour accroître la sécurité de l'identification, la donnée acquise b est seulement échangée entre la carte $E_m$ et le capteur CB.

Si l'individu n'est pas authentifié ou identifié comme un votant autorisé, l'individu ne peut pas utiliser le terminal de vote pour soumettre une option de vote valide.

Si une vérification est au contraire positive, la carte $E_m$ ou le capteur CB transmet, à une étape 230, au terminal de vote une commande OK d'autorisation pour l'individu de soumettre une option de vote. La Figure 4 correspond à une vérification positive.

Le votant peut alors utiliser une interface numérique du terminal de vote S pour sélectionner une option de vote v parmi plusieurs options possibles, par exemple parmi plusieurs candidats.

Selon des variantes, il est possible de sélectionner plusieurs options lors d'un seul vote et/ou on peut soumettre un vote blanc.

Selon une autre variante, la donnée biométrique nécessaire à l'authentification et l'option de vote sélectionnée sont soumises à la carte Em en même temps. Dans ce cas, l'option de vote est prise en compte si l'identification biométrique dans la carte est réussie.

Il peut arriver qu'un votant autorisé ne puisse pas réaliser une identification biométrique avec une biométrie utilisée par le capteur biométrique CB si ladite biométrie est altérée chez ce votant. De préférence, le dispositif de vote prévoit la possibilité d'utiliser un autre type d'identification, ou bien d'entrer un vote non électronique avec un bulletin de vote en papier.

Dans le présent exemple, le vote électronique vérifie des propriétés de confidentialité et de vérifiabilité. On réalise ici un cryptage de l'option de vote sélectionnée par le votant et une signature du vote crypté, résultant en un bulletin de vote B complet et sécurisé.

La donnée cryptographique DC nécessaire au cryptage et à la signature n'est pas stockée sur la carte mais dans une base de données distante, par exemple dans le serveur C d'enrôlement. La carte $E_m$ communique alors au serveur C le pointeur $P_{DC}$ associé dans la mémoire de la carte avec la donnée biométrique qui a été reconnue lors de l'identification. La carte récupère alors auprès du serveur C la donnée DC cryptée avec la clé K de cryptage de la carte.

Ici, la carte récupère la clé privée $usk_{id}$. La clé $upk_{id}$ est publique.

Ensuite, à une étape 240, une option de vote v sélectionnée par le votant est cryptée à l'aide de la clé de scrutin pk, résultant en un vote crypté c.

L'option de vote est ici en outre chiffrée à l'aide du chiffrement homomorphe T.

Dans cet exemple, le cryptage du vote est réalisé selon un algorithme de cryptage El Gamal. Un nouvel entier aléatoire r est généré lors de chaque cryptage d'une nouvelle option de vote, de préférence par un générateur d'aléa de la carte $E_m$, et le vote crypté est généré en fonction de l'option de vote v et de la clé publique de scrutin pk.

Par exemple, le vote crypté est de forme c = $(\alpha,\beta)$ où $\beta$ dépend de l'option de vote et de la clé publique pk et $\alpha$ dépend de l'entier r.

Le nombre $\alpha$ peut avoir été pré-calculé en amont du cryptage, puisqu'il ne dépend pas de l'option de vote sélectionnée. Ce nombre peut être récupéré à l'étape 240 sous forme cryptée auprès d'une base de données.

De façon avantageuse, le cryptage 240 comprend en outre la génération d'une preuve de validité de vote associée au vote crypté. Il s'agit ici d'une preuve que l'option de vote et le vote crypté sont bien formés.

On pourra se référer à la section 4.8 du document Belenios specification : http://www.belenios.org/specification.pdf pour un exemple de calcul de vote crypté en fonction de la clé de scrutin et de preuve de validité de vote en fonction d'une clé privée (« credential »).

Le votant ne peut générer une preuve de validité de vote que s'il possède des données cryptographiques de vote enregistrées sur la carte. Cela garantit que la preuve de cryptage provient bien d'une carte électronique, après une identification biométrique réussie. De plus, ce mode de cryptage garantit le caractère confidentiel du vote puisque la clé de décryptage associée au chiffrement homomorphe n'est pas publique.

A une étape 250, le procédé de vote comprend la signature par le votant de son vote crypté c, pour obtenir un vote signé $\sigma$. La signature dépend de la clé privée $usk_{id}$ du votant ainsi que du vote crypté c.

Dans le présent exemple, la signature est obtenue par un algorithme de signature numérique de Schnorr. La signature dépend alors de la clé privée $usk_{id}$, mais aussi de la clé publique $upk_{id}$.

De plus, la signature utilise un nombre aléatoire obtenu par un générateur d'aléa de la carte $E_m$ à chaque nouvelle signature. La signature peut inclure un nombre de la forme $g^w$ avec w un entier aléatoire. Ce nombre peut avoir été pré-calculé en amont de la signature.

La validité de la signature pourra ultérieurement être vérifiée par le terminal de vote et/ou lors du dépouillement, à l'aide de la clé publique $upk_{id}$ du votant, sans nécessiter une connaissance de la clé privée $usk_{id}$.

Une telle signature présente plusieurs avantages. Elle garantit que le vote n'a pas été altéré après la sélection de l'option de vote par le votant. Elle garantit également l'identité du votant et permet de vérifier qu'un seul vote a été soumis par votant autorisé, pour éviter un bourrage des urnes.

On pourra se référer à la section 4.11 du document Belenios specification : http://www.belenios.org/specification.pdf pour un algorithme de calcul de signature et de vérification ultérieure de la validité de la signature.

L'option de vote v est transmise à la carte $E_m$ à l'issue de l'étape 230 et les étapes de cryptage 240 et de signature 250 sont réalisées à l'intérieur de la carte $E_m$.

Un avantage de réaliser le cryptage et la signature des votes à l'intérieur de la carte à puce est d'accroître la sécurité du procédé de vote face à d'éventuelles attaques externes. La carte à puce est plus résistante au piratage qu'un serveur branché sur le réseau.

Notamment, en supposant que la carte à puce est résistante à des attaques externes, le votant ne peut pas avoir accès aux données intermédiaires de cryptage et de signature de son propre vote. Ainsi, le procédé de vote présente une propriété d'absence de récépissé (ou « receipt-freeness »).

A l'issue de l'étape 250, un bulletin de vote complet B a été construit à partir de l'option de vote soumise par le votant.

Dans cet exemple, le bulletin de vote est de forme $B=(upk_{id}, c, \sigma)$.

Le bulletin B est centralisé par le terminal S de vote pour envoi au serveur A d'administration.

De façon optionnelle, le terminal S de vote met en œuvre une vérification du bulletin avant de transmettre le bulletin. Le terminal S de vote vérifie la validité du vote signé $\sigma$ à l'aide de la clé publique $upk_{id}$ de votant, de préférence selon un algorithme de preuve à connaissance nulle.

Le terminal S vérifie en outre la validité du vote crypté c. On vérifie sans déchiffrement que le vote crypté correspond au chiffrement d'un vote valide.

Si les vérifications ci-avant sont positives, le bulletin B est transmis à un serveur pour dépouillement.

*Dépouillement des votes*

Le dépouillement des votes peut être réalisé par les serveurs de certification $SC_j$. Chaque serveur dispose d'une clé secrète $sk_j$ pour obtenir les options de vote sélectionnées par les participants au scrutin à partir des votes cryptés c présents dans les bulletins de vote B considérés comme valides.

Le serveur A d'administration réalise une somme des votes cryptés. Les serveurs de certification $SC_j$ calculent chacun un déchiffré partiel de ladite somme. Enfin, le serveur A combine les déchiffrés partiels pour obtenir le déchiffré de la somme des votes cryptés.

Le décryptage complet des options de vote choisies par les votants nécessite donc une coopération de tous les serveurs $SC_j$.

Le serveur d'administration génère ainsi un résultat total de vote $\rho.tot$, par exemple une répartition des votes entre les divers candidats, après un éventuel contrôle de preuves de décryptage générées par les serveurs $SC_j$.

Le chiffrement des options de vote étant homomorphe, les serveurs qui réalisent le dépouillement peuvent obtenir le résultat de vote décrypté, sans disposer des votes décryptés individuels.

En alternative, le dépouillement peut être effectué par un unique serveur, par exemple le serveur A d'administration.

De façon avantageuse, lors de la publication du résultat total de vote, une liste comprenant des hachés des bulletins de vote est également rendue publique. Chaque votant peut se munir de l'identifiant imprimé qu'il a récupéré auprès du terminal de vote lors du scrutin. Cet identifiant imprimé fait apparaître un haché associé de manière unique au bulletin B de vote lors de la génération du bulletin B. Le votant peut vérifier que ledit haché se trouve dans la liste, pour s'assurer que son vote a été pris en compte dans le résultat total.

**Revendications**

1. Procédé d'enrôlement de votants

    en vue d'un scrutin, le procédé étant mis en œuvre par un dispositif électronique ($E_m$) comprenant un élément sécurisé, ledit élément sécurisé comportant une mémoire et des moyens de calcul,
    le procédé comprenant, pour chaque votant, les étapes suivantes mises en œuvre par les moyens de calcul de l'élément sécurisé du dispositif électronique ($E_m$) :

        réception (130) d'une donnée biométrique (t) acquise sur le votant et d'un pointeur ($P_{DC}$) correspondant à une donnée cryptographique de vote (DC), ladite donnée cryptographique de vote (DC) étant stockée dans une base de données d'un serveur (C), le pointeur ($P_{DC}$) étant de taille moindre que celle de la donnée cryptographique de vote (DC) correspondante,
        association (140), dans la mémoire de l'élément sécurisé du dispositif électronique ($E_m$), de la donnée biométrique (t) avec le pointeur ($P_{DC}$) correspondant à la donnée cryptographique de vote (DC) du votant sur lequel ladite donnée biométrique (t) a été acquise,
        afin qu'ultérieurement, lors du scrutin, ledit votant puisse s'identifier de façon biométrique à l'aide du dispositif électronique ($E_m$) et voter avec ladite donnée cryptographique (DC) de vote.

2. Procédé d'enrôlement selon la revendication 1, dans lequel chaque donnée cryptographique de vote correspond de manière unique à un votant donné.

3. Procédé d'enrôlement selon l'une des revendications 1 à 2, dans lequel les données cryptographiques de vote (DC) comprennent une clé secrète de votant $usk_{id}$ et une clé publique de votant $upk_{id}$, de préférence de forme $upk_{id} = g^{uskid} \bmod p$ avec p et g des paramètres de domaine.

4. Procédé d'enrôlement selon l'une des revendications 1 à 3, comprenant une étape préalable d'association, dans une base de données d'un serveur distant, entre un identifiant d'un votant de la pluralité de votants et un identifiant de bureau de vote, le dispositif électronique étant amené à être localisé dans un bureau de vote correspondant audit identifiant de bureau de vote lors du scrutin.

5. Procédé d'enrôlement de votant en vue d'un scrutin, le procédé comprenant :

une mise en œuvre par un dispositif électronique ($E_m$) du procédé selon l'une quelconque des revendications précédentes,
une étape préalable de génération (120) d'au moins une donnée cryptographique de vote (DC) par le serveur comprenant la base de données.

6. Procédé de vote électronique comprenant la mise en œuvre d'un procédé d'enrôlement selon l'une des revendications 1 à 5,
le procédé de vote comprenant en outre les étapes suivantes mises en œuvre par les moyens de calcul de l'élément sécurisé du dispositif électronique ($E_m$) lors du scrutin :

réception (210) d'une donnée biométrique (b) acquise par un capteur biométrique (CB) sur un individu, ladite donnée biométrique (b) correspondant à un type de donnée biométrique utilisé pour l'enrôlement,
vérification (220) d'une correspondance entre la donnée biométrique acquise sur l'individu (b) et une donnée biométrique (t) stockée dans la mémoire du dispositif électronique,
si ladite vérification est positive, transmission au serveur (C) du pointeur ($P_{DC}$) associé dans la mémoire de l'élément sécurisé du dispositif électronique ($E_m$) avec la donnée biométrique correspondante issue de la vérification (t),
réception dudit serveur (C) de la donnée cryptographique de vote (DC) correspondant au pointeur associé ($P_{DC}$), et
transmission d'un résultat de vote généré à l'aide de la donnée cryptographique de vote (DC) correspondant au pointeur associé ($P_{DC}$).

7. Procédé de vote selon la revendication 6, dans lequel
la donnée cryptographique de vote (DC) correspondant au pointeur associé est cryptée avec une clé de cryptage (K) du dispositif électronique.

8. Procédé de vote selon la revendication 6 ou 7, comprenant un cryptage (240) d'une option de vote saisie par l'individu, à l'aide d'une clé de scrutin (pk) pour obtenir un vote crypté (c) compris dans le résultat de vote.

9. Procédé de vote selon la revendication 8, dans lequel l'étape de cryptage (240) comprend en outre la génération d'une preuve de validité de vote à l'aide de la donnée cryptographique de vote (DC) correspondant au pointeur associé, de préférence à l'aide d'une clé secrète de votant ($usk_{id}$) comprise dans les données cryptographiques.

10. Procédé de vote selon l'une des revendications 6 à 9, dans lequel l'étape de vérification comprend la recherche d'une correspondance entre la donnée biométrique acquise par le capteur et la pluralité de données biométriques stockées lors de l'enrôlement, de préférence par une méthode de recherche de voisin le plus proche ou « Nearest Neighbour Search »

11. Dispositif électronique ($E_m$) comprenant un élément sécurisé pour la mise en œuvre d'un procédé d'enrôlement d'un votant selon l'une des revendications 1 à 5 et pour la mise en œuvre d'un procédé de vote selon l'une des revendications 6 à 10,

ledit élément sécurisé comportant une mémoire configurée pour stocker une pluralité d'associations entre un pointeur ($P_{DC}$) correspondant à une donnée cryptographique (DC) de vote et une donnée biométrique (t),
ledit élément sécurisé comportant des moyens de calcul configurés pour vérifier une correspondance entre l'une des données biométriques (t) stockées et une donnée biométrique acquise d'un même type que les données biométriques (t) stockées.

12. Dispositif électronique selon la revendication 11, le dispositif électronique étant une carte à puce ou une clé USB ou un dispositif mobile sécurisé.

13. Dispositif de vote destiné à être installé dans un bureau de vote et comprenant :

- un dispositif électronique ($E_m$) selon l'une des revendications 11 ou 12,
- un capteur biométrique (CB),
- un terminal de vote (S) comprenant une interface utilisateur.

**Patentansprüche**

1. Verfahren zur Registrierung von Abstimmenden im Hinblick auf eine Abstimmung, wobei das Verfahren von einer elektronischen Vorrichtung ($E_m$) implementiert wird, die ein gesichertes Element umfasst, wobei das gesicherte Element einen Speicher und Rechenmittel umfasst,

wobei das Verfahren für jeden Abstimmenden die folgenden Schritte umfasst, die von den Rechenmitteln des gesicherten Elements der elektronischen Vorrichtung ($E_m$) durchgeführt werden:

Empfangen (130) biometrischer Daten (t), die über den Abstimmenden erfasst wurden, und eines Zeigers ($P_{DC}$), der kryptografischen Abstimmungsdaten (DC) entspricht, wobei die kryptografischen Abstimmungsdaten (DC) in einer Datenbank eines Servers (C) gespeichert sind, wobei der Zeiger ($P_{DC}$) eine geringere Größe als die entsprechenden kryptografischen Abstimmungsdaten (DC) hat, Zuordnen (140), in dem Speicher des gesicherten Elements der elektronischen Vorrichtung ($E_m$), der biometrischen Daten (t) zu dem Zeiger ($P_{DC}$), der den kryptografischen Abstimmungsdaten (DC) des Abstimmenden entspricht, von dem die biometrischen Daten (t) erfasst wurden, damit sich der Abstimmende später bei der Abstimmung mithilfe der elektronischen Vorrichtung ($E_m$) biometrisch identifizieren und mit den kryptografischen Abstimmungsdaten (DC) abstimmen kann.

2. Registrierungsverfahren nach Anspruch 1, wobei alle kryptographischen Abstimmungsdaten jeweils eindeutig einem bestimmten Abstimmenden entsprechen.

3. Registrierungsverfahren nach einem der Ansprüche 1 bis 2, wobei die kryptographischen Abstimmungsdaten (DC) einen geheimen Schlüssel des Abstimmenden $usk_{id}$ und einen öffentlichen Schlüssel des Abstimmenden $upk_{id}$ umfassen, vorzugsweise in der Form $upk_{id} = g^{uskid} \bmod p$, wobei p und g Domänenparameter sind.

4. Registrierungsverfahren nach einem der Ansprüche 1 bis 3, das einen vorherigen Schritt der Zuordnung einer Kennung eines Abstimmenden aus der Vielzahl von Abstimmenden und einer Kennung eines Wahllokals in einer Datenbank eines Remote-Servers umfasst, wobei die elektronische Vorrichtung in einem Wahllokal lokalisiert wird, das der Wahllokalkennung bei der Abstimmung entspricht.

5. Verfahren zur Registrierung von Abstimmenden im Hinblick auf eine Abstimmung, wobei das Verfahren Folgendes umfasst:

Implementieren des Verfahrens nach einem der vorstehenden Ansprüche durch eine elektronische Vorrichtung ($E_m$),

einen vorherigen Schritt des Erzeugens (120) mindestens kryptografischer Abstimmungsdaten (DC) durch den Server, der die Datenbank enthält.

6. Elektronisches Abstimmungsverfahren, das die Implementierung eines Registrierungsverfahrens nach einem der Ansprüche 1 bis 5 umfasst, wobei das Abstimmungsverfahren weiter die folgenden Schritte umfasst, die von den Rechenmitteln des gesicherten Elements der elektronischen Vorrichtung ($E_m$) bei der Abstimmung implementiert werden:

Empfangen (210) von biometrischen Daten (b), die von einem biometrischen Sensor (CB) an einer Person erfasst wurden, wobei diese biometrischen Daten (b) einer Art von biometrischen Daten entsprechen, die für die Registrierung verwendet wurden, Überprüfen (220) einer Übereinstimmung zwischen den an der Person (b) erfassten biometrischen Daten und biometrischen Daten (t), die in dem Speicher der elektronischen Vorrichtung gespeichert sind, wenn die Überprüfung positiv ist, Übermittlung des zugehörigen Zeigers ($P_{DC}$) in dem Speicher des gesicherten Elements der elektronischen Vorrichtung ($E_m$) an den Server (C) mit den entsprechenden biometrischen Daten aus der Überprüfung (t), Empfangen an dem Server (C) der kryptografischen Abstimmungsdaten (DC), die dem zugehörigen Zeiger ($P_{DC}$) entsprechen, und Übermitteln eines Abstimmungsergebnisses, das unter Verwendung der kryptografischen Abstimmungsdaten (DC) generiert wurde, die dem zugehörigen Zeiger ($P_{DC}$) entsprechen.

7. Abstimmungsverfahren nach Anspruch 6, wobei die dem zugehörigen Zeiger entsprechenden kryptographischen Abstimmungsdaten (DC) mit einem Verschlüsselungsschlüssel (K) der elektronischen Vorrichtung verschlüsselt werden.

8. Abstimmungsverfahren nach Anspruch 6 oder 7, das eine Verschlüsselung (240) einer von der Person eingegebenen Abstimmungsoption mithilfe eines Abstimmungsschlüssels (pk) umfasst, um eine verschlüsselte Abstimmung (c) zu erhalten, die in dem Abstimmungsergebnis enthalten ist.

9. Abstimmungsverfahren nach Anspruch 8, wobei der Verschlüsselungsschritt (240) ferner das Erzeugen eines Nachweises der Gültigkeit der Abstimmung mithilfe der dem zugehörigen Zeiger entsprechenden kryptografischen Abstimmungsdaten (DC), vorzugsweise mithilfe eines in den kryptografischen Daten enthaltenen geheimen Schlüssels des Abstimmenden ($usk_{id}$), umfasst.

**10.** Abstimmungsverfahren nach einem der Ansprüche 6 bis 9, wobei der Überprüfungsschritt die Suche nach einer Übereinstimmung zwischen den von dem Sensor erfassten biometrischen Daten und der Vielzahl der bei der Registrierung gespeicherten biometrischen Daten umfasst, vorzugsweise durch eine Methode der Suche nach dem nächsten Nachbarn oder "Nearest Neighbour Search".

**11.** Elektronische Vorrichtung ($E_m$) mit einem gesicherten Element zur Implementierung eines Verfahrens zur Registrierung eines Abstimmenden nach einem der Ansprüche 1 bis 5 und zur Implementierung eines Abstimmungsverfahrens nach einem der Ansprüche 6 bis 10,

> wobei das gesicherte Element einen Speicher aufweist, der so konfiguriert ist, dass er eine Vielzahl von Zuordnungen zwischen einem Zeiger ($P_{DC}$), der kryptografischen Abstimmungsdaten (DC) entspricht, und biometrischen Daten (t) speichert,
> wobei das gesicherte Element Rechenmittel umfasst, die so konfiguriert sind, dass sie eine Übereinstimmung zwischen jeweils gespeicherten biometrischen Daten (t) und erfassten biometrischen Daten des gleichen Typs wie die gespeicherten biometrischen Daten (t) überprüfen.

**12.** Elektronische Vorrichtung nach Anspruch 11, wobei die elektronische Vorrichtung eine Chipkarte oder ein USB-Stick oder eine sichere mobile Vorrichtung ist.

**13.** Abstimmungsvorrichtung, die dafür bestimmt ist, in einem Wahllokal installiert zu werden, und Folgendes umfasst:

> - eine elektronische Vorrichtung ($E_m$) nach einem der Ansprüche 11 oder 12,
> - einen biometrischen Sensor (CB),
> - ein Abstimmungsendgerät (S) mit einer Benutzeroberfläche.

**Claims**

**1.** A method of registering voters with a view to voting, the method being implemented by an electronic device ($E_m$) comprising a secure element, the secure element comprising a memory and computing means,
the method comprising, for each voter, the following steps performed by the computing means of the secure element of the electronic device ($E_m$):

> receiving (130) biometric data (t) collected about the voter and a pointer ($P_{DC}$) corresponding to cryptographic voting data (DC),
> wherein the cryptographic voting data (DC) is stored in a database of a server (C), wherein the pointer ($P_{DC}$) has a smaller size than the corresponding cryptographic voting data (DC),
> associating (140), in the memory of the secure element of the electronic device ($E_m$), the biometric data (t) with the pointer ($P_{DC}$) corresponding to the cryptographic voting data (DC) of the voter from whom the biometric data (t) were acquired,
> so that the voter can later identify biometrically during the vote using the electronic device ($E_m$) and vote using the cryptographic voting data (DC).

**2.** The registration method according to claim 1, wherein each cryptographic voting data uniquely corresponds to a particular voter.

**3.** The registration method according to any one of claims 1 to 2, wherein the cryptographic voting data (DC) comprises a secret key of the voter $usk_{id}$ and a public key of the voter $upk_{id}$, preferably in the form $upk_{id} = g^{uskid} \bmod p$, where p and g are domain parameters.

**4.** The registration method according to any one of claims 1 to 3, comprising a prior step of assigning an identifier of a voter from the plurality of voters and an identifier of a polling station in a database of a remote server, wherein the electronic device is located in a polling station corresponding to the polling station identifier in the voting.

**5.** Procedure for registering voters with a view to voting, the procedure comprising the following:

> Implementing the method according to any one of the preceding claims by an electronic device ($E_m$),
> a prior step of generating (120) at least cryptographic voting data (DC) by the server containing the database.

**6.** An electronic voting method comprising implementing a registration method according to any one of claims 1 to 5,
wherein the voting method further comprises the following steps implemented by the computing means of the secure element of the electronic device ($E_m$) in the voting:

receiving (210) biometric data (b) captured by a biometric sensor (CB) on a person, said biometric data (b) corresponding to a type of biometric data used for enrollment,

verifying (220) a match between the biometric data captured on the person (b) and biometric data (t) stored in the memory of the electronic device,

if the check is positive, transmission of the associated pointer ($P_{DC}$) in the memory of the secure element of the electronic device ($E_m$) to the server (C) with the corresponding biometric data from the check (t),

receiving at the server (C) the cryptographic voting data (DC) corresponding to the associated pointer ($P_{DC}$), and

transmitting a voting result generated using the cryptographic voting data (DC) corresponding to the associated pointer ($P_{DC}$).

7. The voting method according to claim 6, wherein the cryptographic voting data (DC) corresponding to the associated pointer is encrypted with an encryption key (K) of the electronic device.

8. The voting method according to claim 6 or 7, comprising encrypting (240) a voting option entered by the person using a voting key (pk) to obtain a encrypted vote (c) included in the voting result.

9. The voting method according to claim 8, wherein the encrypting step (240) further comprises generating a proof of validity of the vote using the cryptographic voting data (DC) corresponding to the associated pointer, preferably using a secret key of the voter ($usk_{id}$) contained in the cryptographic data.

10. The matching method according to any one of claims 6 to 9, wherein the verifying step comprises searching for a match between the biometric data captured by the sensor and the plurality of biometric data stored in the registry, preferably by a nearest neighbor search method or "Nearest Neighbour Search".

11. An electronic device ($E_m$) comprising a secure element for implementing a method for registering a voter according to any one of claims 1 to 5 and for implementing a voting method according to any one of claims 6 to 10,

wherein the secure element comprises a memory configured to store a plurality of mappings between a pointer ($P_{DC}$) corresponding to cryptographic voting data (DC) and biometric data (t),

wherein the secure element comprises computing means configured to verify a match between respective stored biometric data (t) and captured biometric data of the same type as the stored biometric data (t).

12. The electronic device according to claim 11, wherein the electronic device is a smart card or a USB stick or a secure mobile device.

13. Voting device intended to be installed in a polling station and comprising the following:

- an electronic device ($E_m$) according to one of claims 11 or 12,
- a biometric sensor (CB),
- a voting terminal (S) with a user interface.

FIG. 1

# FIG. 2

## FIG. 3A

Serveur d'enrôlement C               Carte à puce $E_m$

100

$pk$

110

$t$

130 —————————— $pk,t$ ——————————▶ 130

120a

DC

140

$(DC,t)$

## FIG. 3B

Serveur d'enrôlement C               Carte à puce $E_m$

100

$pk$

110

$t$

120b

DC

130 —————————— $pk,P_{DC},t$ ——————————▶ 130

140

$(P_{DC},t)$

# FIG. 4

Capteur biométrique CB          Carte à puce $E_m$          Serveur d'enrôlement C

210 ———————— b ————————→ 210

220

OK

230

240 ←------ $E(P_{DC})$ ------→ 240

C            ←------ $E(Usk_{id}, Upk_{id})$

250

$B = (Upk_{id}, C, \sigma)$

EP 3 623 975 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7729991 B2

**Littérature non-brevet citée dans la description**

- **LEE** ; **KIM**. Receipt-free electronic voting scheme with a tamper-resistant randomizer. *Information Security and Cryptology - ICISC 2002, Revised Papers*, 2002, 389-406
- **MAGKOS** ; **CHRISSIKOPOULOS**. Receipt-freeness in large-scale elections without untappable channels. *Towards the E-Society : E-Commerce, E-Business, and E-Government, I3E, n*, 2001, 683-693
- *Mobile/NFC Security Fundamentals*, https://www. securetechalliance.org/resources/webinars/Secure Element s 101 FINAL3 032813.pdf

- *MINEX II - An assessment of Match-on-Card technology*, https://www.nist.gov/itl/iad/image-group/minex-ii-assessment-match-card-technology
- **SCHROFF** ; **KALENICHENKO** ; **PHILBIN**. Facenet: A unified embedding for face recognition and clustering. *IEEE Conference on Computer Vision and Pattern Recognition, CVPR*, 2015, 815-823
- **HAO** ; **DAUGMAN** ; **ZIELINSKI**. A fast search algorithm for a large fuzzy database. *IEEE Trans. Information Forensics and Security*, 2008, vol. 3 (2), 203-212